# EUROPÄISCHE PATENTSCHRIFT

(11) **EP 3 484 030 B1**
(45) Veröffentlichungstag und Bekanntmachung des Hinweises auf die Patenterteilung: **14.04.2021**
(21) Anmeldenummer: 18205231.6
(22) Anmeldetag: 08.11.2018
(51) Int. Cl.: H02K 16/04, H02K 21/22, H02K 41/03, H02K 1/27

(54) **HUB- UND DREHEINHEIT**
LIFTING AND ROTATING UNIT
UNITÉ DE LEVAGE ET DE ROTATION

(30) Priorität: 08.11.2017 DE 102017126148
(43) Veröffentlichungstag der Anmeldung: 15.05.2019
(73) Patentinhaber: SCHUNK Electronic Solutions GmbH, 78112 St. Georgen (DE)
(72) Erfinder: Ruggieri, Patrick, 78647 Trossingen (DE)
(74) Vertreter: DREISS Patentanwälte PartG mbB

(56) Entgegenhaltungen:
- EP-A1- 1 780 878
- EP-A1- 1 816 725
- EP-A1- 2 523 320
- EP-A1- 3 422 544
- EP-A1- 3 422 545
- CN-A- 102 843 015
- CN-A- 105 762 991
- CN-A- 105 811 732
- DE-U1-202013 000 279
- US-A1- 2016 087 516
- US-B1- 7 218 017

## Beschreibung

Die Erfindung betrifft eine Hub- und Dreheinheit mit einem Primärteil und einem das Primärteil konzentrisch umgebenden und um eine Drehachse drehbar angeordneten Rotor. Mit derartigen Hub- und Dreheinheiten wird eine Drehbewegung und eine Linearbewegung vereinigt. Die Drehbewegung wird dabei durch einen Elektromotor bereitgestellt. Aus dem bekannten Stand der Technik ist bekannt, die Linearbewegung beispielsweise durch einen pneumatischen Zylinder zu erzeugen. Solche Hub- und Dreheinheiten werden beispielsweise von der Firma Festo unter der Bezeichnung Dreh-Hub-Modul EHMB angeboten.

Eine Hub- und Dreheinheit mit Merkmalen des Oberbegriffs des Patentanspruchs 1 ist aus der CN 105 762 991 A bekannt. Ähnliche Hub- und Dreheinheiten sind aus der DE 10 2012 209 905 A1 und US 2016/0 087 516 A1 bekannt. Der Rotor dieser Einheit weist ringartig ausgebildete Permanentmagnete und ringartig ausgebildete Segmente auf, die abwechselnd um einen stabartigen Schaft herum angeordnet sind.

Der vorliegenden Erfindung liegt die Aufgabe zugrunde, eine Hub- und Dreheinheit vergleichsweise klein und dennoch kostensparend bei insbesondere einer vergleichsweise geringen zu bewegenden Masse bereitzustellen.

Diese Aufgabe wird gelöst durch eine Hub- und Dreheinheit mit den Merkmalen des Patentanspruchs 1. Eine solche Einheit sieht folglich vor, dass ein den Rotor konzentrisch umgebendes weiteres Primärteil vorgesehen ist. Eines der beiden Primärteile dient dann als Drehprimärteil und das andere Primärteil als Längsprimärteil. Der Rotor ist ferner entlang der Drehachse in Längsrichtung bewegbar angeordnet. Der Rotor ist zudem so ausgebildet, dass er bei Bestromung des Drehprimärteils in eine Drehbewegung um die Drehachse versetzt wird und dass er bei Bestromung des Längsprimärteils in eine Längsbewegung entlang der Drehachse versetzt wird. Der Rotor weist dabei parallel oder schräg zur Rotorachse verlaufende Rotorsegmente auf, wobei benachbarte Rotorsegmente unterschiedlich magnetisch polarisiert sind. Durch Vorsehen der abwechselnd magnetisch polarisierten, in Umfangsrichtung benachbart angeordneten Rotorsegmenten, kann der Rotor auch auf vergleichsweise einfache Art und Weise aufgebaut werden. Die einzelnen Rotorsegmente wirken dann mit den beiden Primärteilen entsprechend zusammen.

Zur magnetischen Polarisierung der Rotorsegmente ist vorgesehen, dass jeweils zwischen zwei benachbart angeordneten Rotorsegmenten jeweils eine permanent magnetisierte Magnetleiste vorgesehen ist. Die Magnetleisten sind dann so angeordnet, dass sie mit der gleichen Polarisierung jeweils ein Rotorsegment einfassen. Zwischen zwei Nordpolen zweier Magnetleisten ist folglich ein Segment vorgesehen, das dann als Nordpol polarisiert ist und zwischen zwei Südpolen zweier Magnetleisten ist dann ein Rotorsegment vorgesehen, das ebenfalls als Südpol magnetisiert ist. Dadurch kann gewährleistet werden, dass die einzelnen, jeweils benachbarten Rotorsegmente jeweils eine unterschiedliche Polarisierung vorsehen.

Die Wirkabschnitte sind ferner so angeordnet, dass die Wirkabschnitte von im Umfangsrichtung benachbarten, unterschiedlich magnetisch polarisierten Rotorsegmenten versetzt zueinander sind. Betrachtet man folglich die Wirkabschnitte in Umfangsrichtung, so sind diese zahnartig ausgebildet, wobei zwischen zwei erhabenen Wirkabschnitten dann eine Lücke vorgesehen ist. Betrachtet man die Wirkabschnitte in Längsrichtung, so ergibt sich vorteilhafterweise ein entsprechendes Bild; zwischen zwei erhabenen Wirkabschnitten gleicher Polarisierung ist eine Lücke vorgesehen.

Die Erfindung hat auch folglich den Vorteil, dass zwei Primärteile und lediglich ein Rotor eingesetzt werden, wobei der Rotor mit beiden Primärteilen zusammenwirkt. So kann bei Bestromung des einen Primärteils eine Drehbewegung und bei Bestromung des anderen Primärteils eine Längsbewegung des Rotors erreicht werden. Bei Bestromung beider Primärteile kann eine überlagerte Bewegung, die aus einer Drehbewegung und einer zeitgleichen Längsbewegung resultiert, durchgeführt werden. Der Rotor kann dabei eine Abtriebswelle vorsehen oder mit einem Stellglied zusammenwirken, welches letztlich die Hub- oder Drehbewegung bewirkt.

Vorteilhafterweise ist das radial innenliegende Primärteil das Drehprimärteil und das radial außen liegende Primärteil das Längsprimärteil. Allerdings ist auch eine andere Konstellation denkbar, bei der das radial innenliegende Primärteil das Längsprimärteil und das radial außen liegende Primärteil das Drehprimärteil ist.

Vorzugsweise weist das Drehprimärteil jeweils um Kernachsen verlaufende Wicklungen auf, wobei die Kernachsen senkrecht zur Drehachse verlaufend angeordnet sind. Ferner ist vorteilhaft, wenn das Längsprimärteil jeweils um Kernachsen verlaufende Wicklungen aufweist, wobei die Kernachsen der Wicklungen des Längsprimärteils parallel zur Drehachse und insbesondere in der Drehachse liegend verlaufend angeordnet sind. Aufgrund der unterschiedlichen Anordnungen der Wicklungen der Drehprimärteile können unterschiedliche Bewegungen des Rotors bei entsprechender Bestromung der Primärteile erzielt werden.

Der Rotor kann dabei ein radial innenliegendes, um die Drehachse verlaufendes Basisrohr umfassen, auf dessen radial außenliegender Seite die Rotorsegmente vorgesehen sind. Der Rotor kann dabei auch einstückig ausgebildet sein, d.h. das Basisrohr und die einzelnen Rotorsegmente werden dann vom selben Bauteil gebildet. Die Magnetleisten, sofern diese vorgesehen sind, sind dann zwischen den jeweiligen Rotorsegmenten angeordnet. Allerdings ist auch eine Ausbildung ohne dass Basisrohr denkbar. Die Rotorsegmente können dann unmittelbar miteinander verbunden oder mit den Magnetleisten gefügt sein.

Um ein geeignetes Zusammenwirken der Rotorsegmente mit dem Längsprimärteil und/oder mit dem Drehprimärteil zu erreichen, ist vorteilhaft, wenn die Rotorsegmente auf der dem Längsprimärteil und/oder dem Drehprimärteil zugewandten Seite erhabene Wirkabschnitte aufweisen. Die Wirkabschnitte sind so angeordnet, dass bei einer Bestromung des Längsprimärteils der Rotor entlang der Drehachse bewegt wird und dass bei einer Bestromung des Drehprimärteils der Rotor um die Drehachse verdreht wird.

Die Wirkabschnitte können insbesondere in Draufsicht, also senkrecht zur Drehachse, rechteckig oder quadratisch ausgebildet sein.

Die Wirkabschnitte sind ferner vorzugsweise derart angeordnet, dass die Eckbereiche von benachbarten Wirkabschnitten einander gegenüberliegen, kreuzartig angeordnet sind. In Draufsicht, also senkrecht zur Drehachse, ergibt sich dann ein gleichmäßiges Muster, bei dem zwischen zwei erhabenen Wirkabschnitten jeweils eine Lücke vorgesehen ist.

Weitere Einzelheiten und vorteilhafte Ausgestaltungen der Erfindung sind der nachfolgenden Beschreibung zu entnehmen, anhand derer ein Ausführungsbeispiel der Erfindung näher erläutert und beschrieben ist.

Es zeigen:

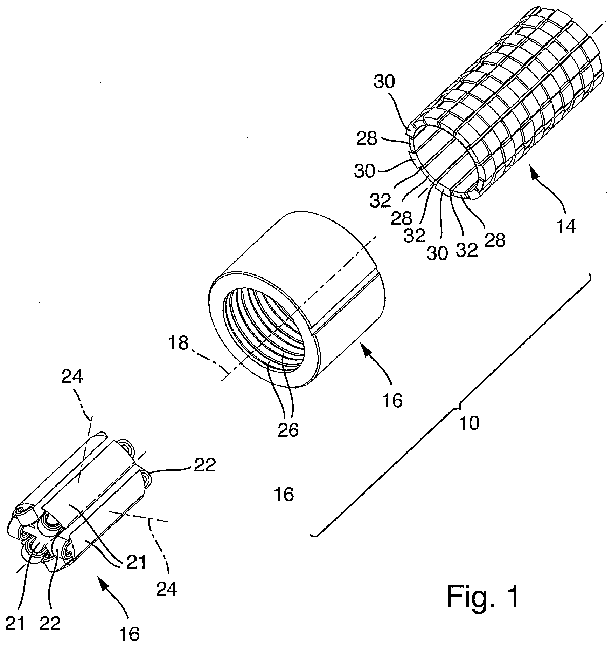

- Figur 1: eine erfindungsgemäße Hub- Dreheinheit in Explosionsdarstellung;
- Figur 2: die Hub- und Dreheinheit gemäß Figur 1 in perspektivischer Seitenansicht;
- Figur 3: das Drehprimärteil und den Rotor der Hub- und Dreheinheit gemäß Figur 1;
- Figur 4: einen Querschnitt durch das Drehprimärteil und den Rotor der Hub- und Dreheinheit gemäß Figur 2; und
- Figur 5: einen Längsschnitt durch den Rotor und das Längsprimärteil der Hub- und Dreheinheit gemäß Figur 2 .

In den Figuren ist eine Hub- und Dreheinheit 10 gezeigt, die ein erstes Primärteil in Form eines Drehprimärteils 12, einen Rotor 14 sowie ein zweites Primärteil, das als Längsprimärteil 16 ausgebildet ist, umfasst. Die beiden Primärteile 12 und 16 sind dabei ortsfest angeordnet. Der Rotor 14 ist zwischen den beiden Primärteilen 12 und 16 um eine Drehachse 18 drehbar angeordnet und entlang der Drehachse 18 in Längsrichtung bewegbar. Der Rotor 14 ist konzentrisch um das Drehprimärteil 12 angeordnet und das Längsprimärteil 16 ist konzentrisch um den Rotor 14 angeordnet.

Das Drehprimärteil 12 weist ein geblechtes Grundteil 20 mit Ankerabschnitten 17 auf, um die Wicklungen 22 vorgesehen sind. Die Wicklungen 22 verlaufen dabei jeweils um eine Kernachse 24, die jeweils senkrecht zur Drehachse 18 verlaufen. Die Wicklungen 22 erstrecken sich dabei in Längsrichtung, parallel zur Drehachse 18.

Das Längsprimärteil 16 sieht ebenfalls Wicklungen 26 vor, welche allerdings jeweils auf um konzentrisch zur Drehachse 18 verlaufenden Kreisbahnen liegen. Dadurch bilden die Wicklungen 26 eine Kernachse, die parallel zur Drehachse 18 verläuft bzw. in der Drehachse 18 liegt.

Der Rotor 14 ist dabei derart ausgebildet, dass er bei Bestromung des Drehprimärteils 12, bzw. dessen Wicklungen 22, in eine Drehbewegung um die Drehachse 18 versetzt wird und dass er bei Bestromung des Längsprimärteils 16, bzw. dessen Wicklungen 26, in Längsbewegung entlang der Drehachse 18 versetzt wird. Bei Bestromung beider Primärteile 12 und 16 erfolgt eine überlagerte Hub- und Drehbewegung des Rotors 14.

Am Rotor 14 kann ein Stellglied vorgesehen sein, welches die Hub- und/oder Drehbewegung des Rotors 14 auf ein entsprechendes Bauteil überträgt.

Wie aus den Figuren deutlich wird, weist der Rotor 14 parallel zur Rotorachse 18 verlaufende Rotorsegmente 28, 30 auf. Benachbarte Rotorsegmente 28, 30 sind jeweils unterschiedlich magnetisch polarisiert. Die Rotorsegmente 28 sehen beispielsweise eine Nord-Polarisierung vor und die Rotorsegmente 30 eine Süd-Polarisierung. Zwischen zwei Rotorsegmenten 28 ist jeweils ein Rotorsegment 30 angeordnet und zwischen zwei Rotorsegmenten 30 ist jeweils ein Rotorsegment 28 angeordnet.

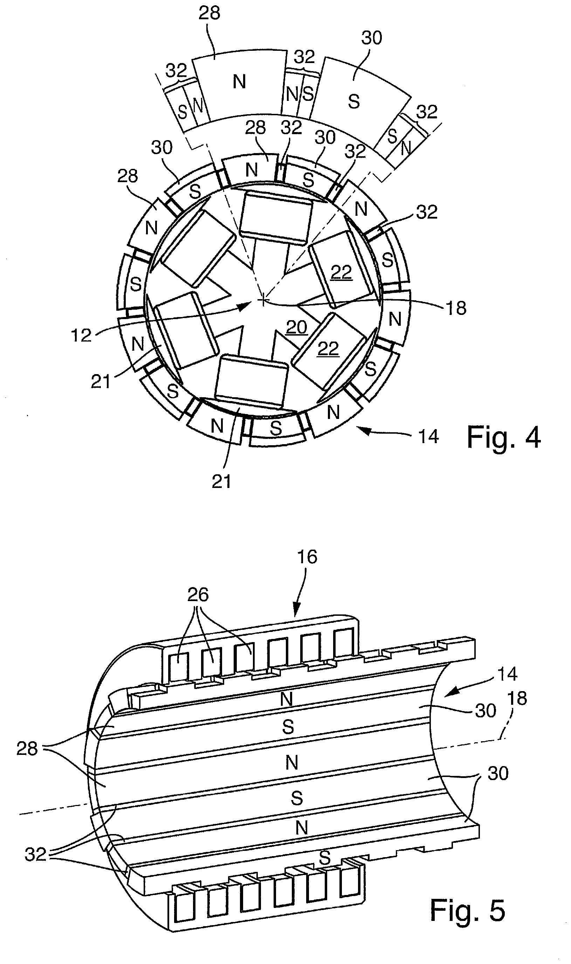

Zwischen jeweils zwei benachbarten Rotorsegmenten 28 und 30 ist eine parallel zur Drehachse verlaufend angeordnete, permanent magnetisierte Magnetleiste 32 vorgesehen. Wie aus dem vergrößerten Ausschnitt der Figur 4 hervorgeht, bildet jede Magnetleiste 32 einen sich parallel zur Drehachse 18 erstreckenden Nordpol N und Südpol S aus. Zwischen zwei einander zugewandten Nord-Polarisierungen zweier Magnetleisten 32 ist jeweils ein Rotorsegment 28 mit einer Nord-Polarisierung vorgesehen. Zwischen zwei einander zugewandten Süd-Polarisierungen zweier Magnetleisten 32 ist jeweils ein Rotorsegment 30 mit einer Süd-Polarisierung vorgesehen. Durch die beschriebene Anordnung kann gewährleistet werden, dass sämtliche Rotorsegmente 28 und 32 über ihre gesamte Längserstreckung eine vorgesehene Nord-Polarisierung bzw. Süd-Polarisierung erfahren.

Wie insbesondere aus dem Schnitt gemäß Figur 4 deutlich wird, sind insgesamt sieben Rotorsegmente 28 mit einer Nord-Polarisierung und sieben Rotorsegmente 30 mit einer Süd-Polarisierung vorgesehen. Zwischen den insgesamt vierzehn Rotorsegmenten 28, 30 ist jeweils eine Magnetleiste 32 angeordnet.

Auf der radialen innenliegenden Seite weist der Rotor, wie aus insbesondere Figur 4 und 5 deutlich wird, eine Oberfläche auf, die entlang der Mantelfläche eines Kreiszylinders verläuft. Im Betrieb wirkt folglich das Drehprimärteil 12, bzw. dessen von den Wicklungen 22 umgebenen Ankerabschnitte 21 mit den Rotorsegmenten 28 und 30 derart zusammen, dass bei einer entsprechenden Bestromung der Wicklungen 22 ein Wandermagnetfeld erzeugt wird, aufgrund dessen der Rotor 14 in Rotation um die Drehachse 14 versetzt wird.

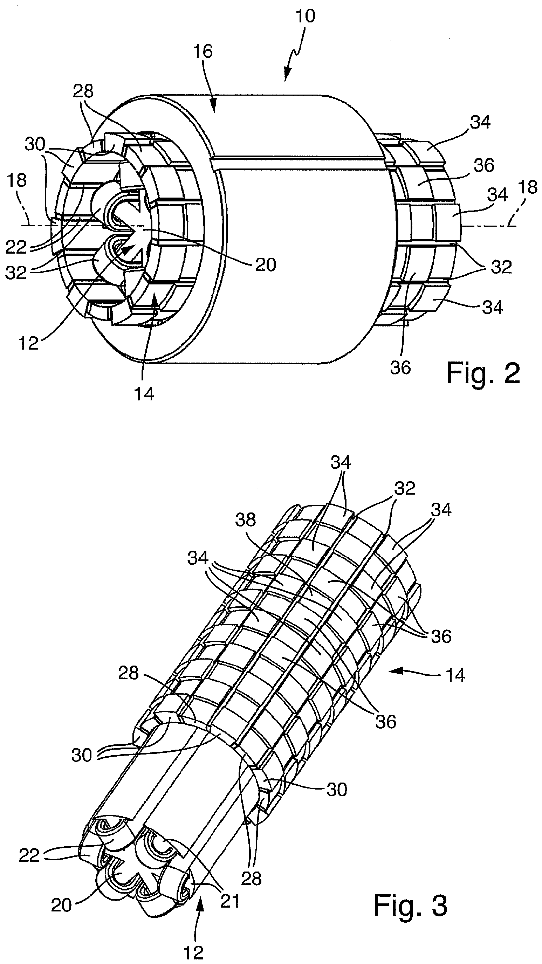

Wie insbesondere aus den Figuren 2, 3 und 5 deutlich wird, weisen die Rotorsegmente 28 und 30 auf ihrer radial äußeren Oberfläche erhabene Wirkabschnitte 34, 36 auf. Die Wirkabschnitte 34 sind dabei auf den Rotorsegmenten 28 angeordnet und die Wirkabschnitte 36 auf den Rotorsegmenten 30. Folglich weisen die Wirkabschnitte 34 eine Nord-Polarisierung auf und die Wirkabschnitte 36 eine Süd-Polarisierung. Die Wirkabschnitte 34, 36 weisen dabei in Ansicht senkrecht zur Drehachse 18 eine quadratische Grundfläche auf. Die Eckbereiche der einzelnen Wirkabschnitte 34 sind dabei benachbart zu den Eckbereichen der einzelnen Wirkabschnitte 36, und umgekehrt, angeordnet. Zwischen zwei auf einem Rotorsegment 28, 30 angeordneten Wirkabschnitten 34, 36 ist jeweils aufgrund der sich ergebenden Vertiefung eine Lücke 38 vorgesehen. Jeweils eine Lücke 38 ist folglich umgeben von zwei einander gegenüberliegenden Wirkabschnitten 36 und zwei einander gegenüberliegenden Wirkabschnitten 34. In Längsrichtung, also parallel zur Drehachse 18, liegt folglich eine Lücke 38 immer zwischen zwei gleich polarisierten Wirkabschnitten 34, 36. In Umfangsrichtung, also in Richtung um die Drehachse 18, verhält es sich entsprechend; zwischen zwei gleichartig gepolten Wirkabschnitten 34, 36 ist jeweils eine Lücke 38 vorgesehen.

Aufgrund dieser sich ergebenden Oberflächenausbildung des Rotors 14 und einer ringförmig um die Drehachse verlaufenden Anordnung der Wicklungen 26 wird erreicht, dass bei einer Bestromung des Längsprimärteils 16, bzw. dessen Wicklungen 26, ein Wandermagnetfeld erzeugt wird, aufgrund dessen der Rotor 14 eine Längsbewegung entlang der Rotorachse 18 durchführt.

Insgesamt hat die in den Figuren gezeigte und beschriebene Hub- Dreheinheit 10 den Vorteil, dass mit lediglich einem Rotor 14 zum einen bei Bestromung des Drehprimärteils 12 eine Drehbewegung des Rotors 14 durchgeführt werden kann und zum anderen bei Bestromen des Längsprimärteils 16 eine Längsbewegung des Rotors 14 erfolgt. Hierdurch ergibt sich ein vergleichsweise einfacher und kompakter Aufbau der Hub- und Dreheinheit 10.

## Patentansprüche

1. Hub- und Dreheinheit (10) mit einem Primärteil und mit einem das Primärteil konzentrisch umgebenden und um eine Drehachse (18) drehbar angeordneten Rotor (14), wobei ein den Rotor (14) konzentrisch umgebendes weiteres Primärteil vorgesehen ist, wobei ein Primärteil als Drehprimärteil (12) und ein Primärteil als Längsprimärteil (16) ausgebildet ist und wobei der Rotor (14) entlang der Drehachse (18) in Längsrichtung bewegbar angeordnet und so ausgebildet ist, dass er bei Bestromung des Drehprimärteils (12) in eine Drehbewegung um die Drehachse (18) versetzt wird und dass er bei Bestromung des Längsprimärteils (16) in eine Längsbewegung entlang der Drehachse (18) versetzt wird, wobei der Rotor (14) parallel oder schräg zur Rotorachse (18) verlaufende Rotorsegmente (28, 30) aufweist, wobei benachbarte Rotorsegmente (28, 30) unterschiedlich magnetisch polarisiert sind, **dadurch gekennzeichnet,**
**dass** zwischen zwei benachbart angeordneten Rotorsegmenten (28, 30) jeweils eine permanent magnetisierte Magnetleiste (32) vorgesehen ist,
**dass** die Rotorsegmente (28, 30) auf der dem Längsprimärteil zugewandten Seite erhabene Wirkabschnitte (34, 36) aufweisen, die dieselbe Polarisierung wie die jeweiligen Rotorsegmente (28, 30) aufweisen,
**dass** die Wirkabschnitte (34, 36) von benachbarten, unterschiedlich magnetisch polarisierten Rotorsegmenten (28, 30) in Umfangsrichtung versetzt zueinander angeordnet sind, wobei in Umfangsrichtung zwischen zwei Wirkabschnitten (34, 36) eine Lücke (38) vorgesehen ist, und
**dass** in Längsrichtung zwischen zwei Wirkabschnitten gleicher Polarisierung (34, 36) eine Lücke (38) vorgesehen ist.

2. Hub- und Dreheinheit (10) nach Anspruch 1, **dadurch gekennzeichnet, dass** das Drehprimärteil (12) jeweils um Kernachsen (24) verlaufende Wicklungen (22) aufweist, wobei die Kernachsen (24) senkrecht zur Drehachse (18) verlaufend angeordnet sind und/oder dass Längsprimärteil (16) jeweils um Kernachsen verlaufende Wicklungen (26) aufweist, wobei die Kernachsen parallel zur Drehachse (18) oder in der Drehachse (18) verlaufend angeordnet sind.

3. Hub- und Dreheinheit (10) nach Anspruch 1 oder 2, **dadurch gekennzeichnet, dass** der Rotor (14) ein radial innenliegendes, um die Drehachse (18) verlaufendes Basisrohr umfasst, auf dessen radial außenliegender Seite die Rotorsegmente (28, 30) vorgesehen sind.

4. Hub- und Dreheinheit (10) nach Anspruch 2 oder 3, **dadurch gekennzeichnet, dass** die Rotorsegmente (28, 30) auf der dem Längsprimärteil (16) und/oder dem Drehprimärteil (12) zugewandten Seite erhabene Wirkabschnitte (34, 36) aufweisen.

5. Hub- und Dreheinheit (10) nach Anspruch 4, **dadurch gekennzeichnet, dass** die Wirkabschnitte (34, 36) in Draufsicht rechteckig oder quadratisch sind.

6. Hub- und Dreheinheit (10) nach Anspruch 3, 4, oder 5,
**dadurch gekennzeichnet, dass** die Wirkabschnitte (34, 36) derart angeordnet sind, dass die Eckbereiche von benachbarten Wirkanschnitten einander gegenüberliegend angeordnet sind.

## Claims

1. Lifting and rotating unit (10) comprising a primary part and a rotor (14) concentrically surrounding the primary part and being rotatable around a rotation axis (18), wherein a further primary part is provided concentrically surrounding the rotor (14), wherein one primary part is formed as a rotary primary part (12) and one primary part is formed as a longitudinal primary part (16), and wherein the rotor (14) is arranged movable in a longitudinal direction along the rotation axis (18) and is formed in such a way that it is caused to rotate around the rotation axis (18) when the rotary primary part (12) is energized and that it is caused to move longitudinally along the rotation axis (18) when the longitudinal primary part (16) is energized, wherein the rotor (14) comprises rotor segments (28, 30) extending parallel or slanting with respect to the rotor axis (18), wherein adjacent rotor segments (28, 30) have different magnetic polarizations,
**characterized in that** between each two adjacent rotor segments (28, 30) a permanently magnetized magnetic bar (32) is provided,
that the rotor segments (28, 30) comprise elevated operative sections (34, 36) on their side facing the longitudinal primary part which have the same polarization as the respective rotor segments (28, 30),
that the operative sections (34, 36) are arranged in a staggered manner in a circumferential direction from adjacent rotor segments (28, 30) having different magnetic polarizations, wherein a gap (38) is provided in the circumferential direction between two operative sections (34, 36), and
that a gap (38) in the longitudinal direction is provided between two operative sections (34, 36) of the same polarization.

2. Lifting and rotating unit (10) as claimed in claim 1, **characterized in that** the rotary primary part (12) comprises windings (22) each extending around core axes (24), wherein the core axes (24) are arranged extending perpendicular to the rotation axis (18), and/or that the longitudinal primary part (16) comprises windings (26) each extending around core axes, wherein the core axes are arranged extending parallel to the rotation axis (18) or on the rotation axis (18).

3. Lifting and rotating unit (10) as claimed in claim 1 or 2, **characterized in that** the rotor (14) comprises a base tube arranged radially inside and extending around the rotation axis (18), the rotor segments (28, 30) being provided on its radially outer side.

4. Lifting and rotating unit (10) as claimed in claim 2 or 3, **characterized in that** the rotor segments (28, 30) comprise elevated operative sections (34, 36) on the side facing the longitudinal primary part (16) and/or the rotary primary part (12) .

5. Lifting and rotating unit (10) as claimed in claim 4, **characterized in that** the operative sections (34, 36) are rectangular or square in plan view.

6. Lifting and rotating unit (10) as claimed in claim 3, 4 or 5, **characterized in that** the operative sections (34, 36) are arranged in such a way that the corner regions of adjacent operative sections are arranged opposite to one another.

## Revendications

1. Unité de levage et de rotation (10) avec une partie primaire et avec un rotor (14) entourant la partie primaire de manière concentrique et disposé de manière à pouvoir tourner autour d'un axe de rotation (18), dans laquelle une autre partie primaire entourant le rotor (14) de manière concentrique est prévue, dans laquelle une partie primaire est réalisée sous la forme d'une partie primaire rotative (12) et une partie primaire sous la forme d'une partie primaire longitudinale (16) et dans laquelle le rotor (14) est disposé de manière à pouvoir se déplacer dans la direction longitudinale le long de l'axe de rotation (18) et réalisé de sorte qu'il est amené dans un mouvement rotatif autour de l'axe de rotation (18) lorsque la partie primaire rotative (12) est alimentée en courant et qu'il est amené dans un mouvement longitudinal le long de l'axe de rotation (18) lorsque la partie primaire longitudinale (16) est alimentée en courant, dans laquelle le rotor (14) présente des segments de rotor (28, 30) s'étendant parallèlement ou de manière oblique par rapport à l'axe de rotor (18), dans laquelle des segments de rotor (28, 30) voisins sont polarisés de façon magnétiquement différente, **caractérisée en ce**
**que** respectivement une baguette magnétique (32) magnétisée de façon permanente est prévue entre deux segments de rotor (28, 30) disposés de manière voisine,
**que** les segments de rotor (28, 30) présentent sur la face tournée vers la partie primaire longitudinale des parties actives (34, 36) saillantes, qui présentent la même polarisation que les segments de rotor (28, 30) respectifs,
**que** les parties actives (34, 36) de segments de rotor (28, 30) voisins, polarisés de façon magnétiquement différente, sont disposées de façon décalée l'une de l'autre dans la direction périphérique, dans laquelle un intervalle (38) est prévu entre deux parties actives (34, 36) dans la direction périphérique,
et
**que** dans la direction longitudinale, un intervalle (38) est prévu entre deux parties actives de polarisation (34, 36) identique.

2. Unité de levage et de rotation (10) selon la revendication 1, **caractérisée en ce que** la partie primaire rotative (12) présente des enroulements (22) s'étendant respectivement autour d'axes centraux (24), dans laquelle les axes centraux (24) sont disposés de manière à s'étendre perpendiculairement à l'axe de rotation (18) et/ou que la partie primaire longitudinale (16) présente des enroulements (26) s'étendant respectivement autour d'axes centraux, dans laquelle les axes centraux sont disposés de manière à s'étendre parallèlement à l'axe de rotation (18) ou dans l'axe de rotation (18).

3. Unité de levage et de rotation (10) selon la revendication 1 ou 2, **caractérisée en ce que** le rotor (14) comprend un tube de base radialement intérieur, s'étendant autour de l'axe de rotation (18), sur la face radialement extérieure duquel les segments de rotor (28, 30) sont prévus.

4. Unité de levage et de rotation (10) selon la revendication 2 ou 3, **caractérisée en ce que** les segments de rotor (28, 30) présentent sur la face tournée vers la partie primaire longitudinale (16) et/ou la partie primaire rotative (12) des parties actives (34, 36) saillantes.

5. Unité de levage et de rotation (10) selon la revendication 4, **caractérisée en ce que** les parties actives (34, 36) sont rectangulaires ou carrées en vue en élévation.

6. Unité de levage et de rotation (10) selon la revendication 3, 4, ou 5, **caractérisée en ce que** les parties actives (34, 36) sont disposées de telle sorte que les zones de coin de parties actives voisines sont disposées à l'opposé les unes des autres.
